# EUROPÄISCHE PATENTSCHRIFT

(11) **EP 4 018 160 B1**
(45) Veröffentlichungstag und Bekanntmachung des Hinweises auf die Patenterteilung: **31.05.2023**
(21) Anmeldenummer: 20745122.0
(22) Anmeldetag: 20.07.2020
(51) Int. Cl.: G01B 21/04

(54) **VORRICHTUNG ZUR KALIBRIERUNG EINER GESCHWINDIGKEIT EINER BEWEGUNGSACHSE EINER MASCHINE**
DEVICE FOR CALIBRATING THE SPEED OF A MOVEMENT AXIS OF A MACHINE
DISPOSITIF D'ÉTALONNAGE DE LA VITESSE D'UN AXE DE DÉPLACEMENT D'UNE MACHINE

(30) Priorität: 22.08.2019 DE 102019122654
(43) Veröffentlichungstag der Anmeldung: 29.06.2022
(73) Patentinhaber: M&H Inprocess Messtechnik GmbH, 88289 Waldburg (DE)
(72) Erfinder: WIEST, Christoph, 88250 Weingarten (DE)
(74) Vertreter: Otten, Roth, Dobler & Partner mbB Patentanwälte
(86) Internationale Anmeldenummer: PCT/EP2020/070405
(87) Internationale Veröffentlichungsnummer: WO 2021/032382

(56) Entgegenhaltungen:
- DE-A1-102015 116 850
- DE-A1-102016 226 073
- JP-B2- 4 868 235
- US-A1- 2007 043 526

## Beschreibung

### Stand der Technik

Werkzeugmaschinen mit einem Messsystem sind beispielsweise aus der DE 10 2016 226 073 A1 bekannt. Messsysteme zur scannenden Erfassung von Messwerten sind ebenfalls bekannt.

Ein bekanntes Messsystem umfasst ein optisches Messinstrument, welches an eine Maschinenachse einer Werkzeug oder Messmaschine anordenbar ausgebildet ist. Beispielsweise zeigt die US 2007/0043526 A1 ein Verfahren zur Kalibrierung einer CCD-Kamera an einer Messmaschine. Mittels des optischen Messinstruments sind beispielsweise mehrere Messwerte in einer zeitlichen Reihenfolge hintereinander erfassbar. Wird das Messinstrument während einer Messung über ein zu messendes Objekt bewegt, können während der Bewegung des Messinstruments damit unterschiedliche Stellen des zu messenden Objekts mit dem Messinstrument vermessen werden. Hierdurch ist beispielsweise ein Höhenprofil des zu messenden Objekts erzeugbar.

Vergleichsweise aufwändig ist es bei diesem bekannten Messsystem die erzeugten Messwerte mit den gemessenen Stellen des Objekts, den Messkoordinaten, in Übereinstimmung zu bringen. Bei bekannten Messsystemen korreliert die Bewegungsgeschwindigkeit des Messinstruments während der Messung mit einer Bestimmungsgenauigkeit der Messstelle. Je genauer die Messstelle bestimmt werden soll, desto langsamer verläuft die Messung oder umgekehrt, je schneller gemessen wird, desto ungenauer ist die Bestimmung der Messstelle.

### Aufgabe und Vorteile der Erfindung

Der Erfindung liegt die Aufgabe zugrunde, eine alternative Vorrichtung zur Kalibrierung oder zur Normierung einer Geschwindigkeit einer Bewegungsachse einer Maschine bereitzustellen. Beispielsweise ist durch die vorgeschlagene Vorrichtung auch eine verbesserte Kalibrierung oder eine verbesserte Normierung eines Messinstruments eines Messsystems durchführbar. Insbesondere ist es Aufgabe der vorliegenden Erfindung ein verbessertes Messsystem mit einer Vorrichtung zur Kalibrierung oder Normierung einer Geschwindigkeit einer Bewegungsachse einer Maschine bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Vorrichtung zur Kalibrierung oder zur Normierung einer Geschwindigkeit einer Bewegungsachse einer Maschine aus, wobei die Maschine als eine Werkzeugmaschine oder als eine Messmaschine ausgebildet ist.

Ein wesentlicher Aspekt der Erfindung ist darin zu sehen, dass die Vorrichtung ein Messinstrument und einen Messaufbau aufweist, wobei der Messaufbau ein erstes und ein zweites Messelement aufweist, wobei das erste und das zweite Messelement in einem definierten und bekannten Abstand zueinander am Messaufbau vorhanden sind, wobei der Messaufbau dazu ausgebildet ist, an einer Werkstückaufnahme der Maschine angeordnet zu werden, wobei das Messinstrument dazu ausgebildet ist, an einer Werkzeugaufnahme der Maschine angeordnet zu werden, wobei das Messinstrument dazu ausgebildet ist, mit einer bekannten Sollfrequenz Messungen auszuführen, wobei die Vorrichtung dazu ausgebildet ist, dass wenn im angeordneten Zustand der Vorrichtung an der Maschine das Messinstrument bei einer bekannten Sollgeschwindigkeit einer Bewegungsachse der Maschine, vom ersten Messelement zum zweiten Messelement bewegt wird, die Vorrichtung, insbesondere das Messinstrument, mit dem jeweiligen Messelement interagiert oder wobei die Vorrichtung, insbesondere das Messinstrument, das jeweilige Messelement erfasst und die Vorrichtung dabei jeweils ein Interaktionsdatum oder ein Erfassungsdatum ermittelt, wobei die Vorrichtung dazu ausgebildet ist, ausgehend vom ersten Interaktionsdatum oder ausgehend vom ersten Erfassungsdatum bis zum zweiten Interaktionsdatum oder bis zum zweiten Erfassungsdatum eine Anzahl an Messungen des Messinstruments zu ermitteln, wobei die Vorrichtung weiter dazu ausgebildet ist, durch die Ermittlung der Anzahl der Messungen einen insbesondere tatsächlichen räumlichen Abstand zweier verschiedener Messungen des Messinstruments für die bekannte Sollgeschwindigkeit der Bewegungsachse der Maschine zu ermitteln. Vorteilhafterweise ist aufgrund des tatsächlichen räumlichen Abstands zwischen den beiden verschiedenen Messungen und bekannten Zeitpunkten an denen die Messungen erfolgt sind eine tatsächliche Geschwindigkeit der Bewegungsachse der Maschine ermittelbar.

Die Maschine ist beispielsweise als ein CNC-Bearbeitungszentrum vorhanden. Zum Beispiel ist die Werkzeugmaschine als ein Dreh- und/oder Fräszentrum ausgebildet. Vorteilhafterweise umfasst die Werkzeugmaschine mehrere zueinander bewegbare Maschinenachsen. Beispielsweise ist die Werkzeugmaschine als ein 3-Achs- oder als eine 5-Achs-Werkzeugmaschine ausgebildet. Beispielsweise ist die Messmaschine als eine Koordinatenmessmaschine ausgebildet.

Vorteilhafterweise ist eine Bewegungsgeschwindigkeit der Bewegungsachse der Maschine konstant. Insbesondere ist die Sollgeschwindigkeit der Bewegungsachse der Maschine konstant. Beispielsweise ist die Werkstückaufnahme an einer Bewegungsachse der Maschine vorhanden. Beispielsweise ist die Werkstückaufnahme an einem Maschinentisch der Maschine ausgebildet. Denkbar ist auch, dass der Maschinentisch unbeweglich vorhanden ist. Vorteilhafterweise ist eine Relativbewegung von allen Bewegungsachsen der Maschine zueinander bekannt.

Die Werkzeugaufnahme der Maschine ist vorteilhafterweise an einer weiteren Bewegungsachse der Maschine angeordnet, welche vorteilhafterweise verschieden ist zur Bewegungsachse der Maschine, an welcher die Werkstückaufnahme vorhanden ist. Bevorzugterweise umfasst das Messinstrument ein Anbringorgan zur Montage des Messinstruments an die Werkstückaufnahme.

Bevorzugterweise ist die Bewegungsrichtung und/oder die Bewegungsgeschwindigkeit des Messinstruments im Bezug zum Messaufbau zu sehen. Entsprechend ist es denkbar, dass das Messinstrument während einer Messung, relativ zu einer Umgebung, z.B. zu einer Umgebung einer Maschine, an welcher das Messinstrument angeordnet ist, positionsfest vorhanden ist und stattdessen der Messaufbau relativ zum Messinstrument und/oder relativ zur Umgebung bewegt wird. Denkbar ist auch, dass sowohl Messinstrument als auch Messaufbau relativ zueinander und relativ zu der Umgebung bewegt werden.

Bevorzugterweise ist das Messinstrument dazu ausgebildet, mit dem jeweilige Messelement eine Wechselwirkung einzugehen. Z.B. beeinflussen sich das Messelement und das Messinstrument gegenseitig.

Beispielsweise erzeugt das Messinstrument bei einer Messung einen Messwert, insbesondere mehrere Messwerte. Vorteilhafterweise erzeugt das Messinstrument Messwerte in einer bestimmten Frequenz, z.B. mit einer bestimmten Abtastrate. Die bestimmte Frequenz ist als Sollfrequenz vorteilhafterweise vorgebbar. Denkbar ist jedoch, dass die vorgegebene Sollfrequenz von der tatsächlichen Frequenz, z.B. der tatsächlichen Istfrequenz, in welcher die Messwerte vom Messinstrument erzeugt werden, abweicht.

Ein Messwert ist beispielsweise als ein räumlicher Abstand zwischen Messinstrument und einem Messelement oder einem Messobjekt vorhanden. Vorteilhafterweise erzeugt das Messinstrument innerhalb eines zeitlichen Intervalls mehrere zeitlich voneinander beabstandete Messungen. Beispielsweise ist die Vorrichtung dazu ausgebildet im Intervall zwischen den beiden Interaktionsdaten eine Anzahl an Messungen des Messinstruments zu ermitteln, wobei die Interaktionsdaten beispielsweise das Intervall begrenzen und im Intervall enthalten sind. Beispielsweise ist die Frequenz der Messwerterzeugung ein Verhältnis zwischen einer Anzahl an Messungen innerhalb des Intervalls und der zeitlichen Länge des Intervalls. Vorteilhafterweise zählen Messwerte auf oder an den Intervallgrenzen zur Anzahl an Messungen innerhalb des Intervalls. Die Sollfrequenz und insbesondere die Istfrequenz beträgt beispielsweise zwischen 20Hz und 1000Hz.

Beispielsweise ermittelt die Vorrichtung eine Anzahl an Messungen des Messinstruments zwischen den beiden Interaktionsdaten. Vorteilhafterweise ist die Vorrichtung dazu ausgebildet, ausgehend vom ersten Interaktionsdatum, insbesondere einschließlich des ersten Interaktionsdatums, bis zum zweiten Interaktionsdatum, insbesondere einschließlich des zweiten Interaktionsdatums, eine Anzahl an Messungen des Messinstruments zu ermitteln. Denkbar ist, dass die Vorrichtung genau zwei Messungen des Messinstruments ermittelt, eine erste Messung am ersten Interaktionsdatum und eine zweite Messung am zweiten Interaktionsdatum. Hierdurch kann zur Ermittlung oder Bestimmung eines räumlichen Abstands zwischen zwei Messungen, bei der bekannten Sollgeschwindigkeit der Maschine auf eine Zeitbasis, z.B. auf einen Zeitgeber verzichtet werden.

Ebenfalls erweist es sich von Vorteil, dass die Vorrichtung dazu ausgebildet ist, einen zeitlichen Abstand zwischen den beiden Interaktionsdaten oder zwischen den beiden Erfassungsdaten zu bestimmen, wobei die Vorrichtung weiter dazu ausgebildet ist, durch die Bestimmung des zeitlichen Abstands einen, insbesondere tatsächlichen, räumlichen Abstand zweier verschiedener Messungen des Messinstruments für die bekannte Sollgeschwindigkeit der Bewegungsachse der Maschine zu ermitteln.

Bevorzugterweise ist die Vorrichtung dazu ausgebildet, eine Anzahl an Messungen zu ermitteln, welche zwischen den beiden Interaktionsdaten oder zwischen den beiden Erfassungsdaten erfolgen. Beispielsweise ist die Vorrichtung dazu ausgebildet, eine Anzahl an Messungen zu ermitteln, welche vom ersten Interaktionsdatum bis zum zweiten Interaktionsdatum oder vom ersten Erfassungsdatum bis zum zweiten Erfassungsdatum erfolgen. Vorteilhafterweise ist die Vorrichtung dazu ausgebildet, aufgrund der ermittelten Anzahl an Messungen, dem bekannten Abstand der beiden Messelemente und dem ermittelten zeitlichen Abstand zwischen den beiden Interaktionsdaten oder zwischen den beiden Erfassungsdaten einen räumlichen Abstand zweier verschiedener Messungen des Messinstruments zu ermitteln. Vorteilhafterweise ist das Messinstrument dazu ausgebildet Messungen in einem konstanten zeitlichen Abstand, z.B. mit der bekannten Istfrequenz, nacheinander auszuführen.

Beispielsweise ist die Vorrichtung dazu ausgebildet auf Grundlage des zeitlichen Abstands zwischen den beiden Interaktionsdaten oder zwischen den beiden Erfassungsdaten und des bekannten Abstands der beiden Messelemente zueinander eine tatsächliche Bewegungsgeschwindigkeit, z.B. eine Istgeschwindigkeit, des an der Werkzeugaufnahme angeordneten Messinstruments zu ermitteln. Vorteilhafterweise ist die Vorrichtung dazu ausgebildet eine tatsächliche Bewegungsgeschwindigkeit des an der Werkzeugaufnahme angeordneten Messinstruments relativ zum Messaufbau zu ermitteln.

Außerdem erweist es sich von Vorteil, dass zur Bestimmung der Interaktionsdaten oder der Erfassungsdaten ein zum Messinstrument verschiedenes Messorgan vorgesehen ist. Vorstellbar ist, dass zur Bestimmung der Interaktionsdaten nicht das Messinstrument mit den Messelementen interagiert, z.B. wechselwirkt, sondern hierzu ein vom Messinstrument verschiedenes Messorgan der Vorrichtung vorgesehen ist.

Vorstellbar ist, dass das Messorgan stiftartig ausgebildet ist, z.B. als ein Kalibrierdorn. Vorteilhafterweise ist das Messelement als eine Lichtschranke oder als ein Tastelement vorhanden. Beispielsweise detektiert ein Messelement, z.B. die Lichtschranke, das Messinstrument, insbesondere das Messorgan, bei einer Bewegung des Messinstruments vom ersten Messelement zum zweiten und löst dadurch ein Interaktionsdatum oder ein Erfassungsdatum aus, z.B. einen Trigger. Hierdurch ist eine tatsächliche durchschnittliche Geschwindigkeit des Messinstruments oder des Messorgans vom ersten zum zweiten Messelement ermittelbar.

In einer vorteilhaften Ausgestaltung der Erfindung ist das Messinstrument als ein berührungslos arbeitendes Messinstrument ausgebildet.

Das Messinstrument ist beispielsweise als ein Messsensor vorhanden. Das Messinstrument ist beispielsweise als ein konfokal-chromatischer Abstandssensor, als ein Laserscanner, ein Linienscanner und/oder als ein bildgebendes Messinstrument, z.B. als ein CCD-Sensor, ausgebildet. Beispielsweise ist das Messinstrument als ein Linienscanner vorhanden. Bevorzugterweise ist das Messinstrument als ein Laser-Triangulationsscanner ausgebildet. Vorteilhafterweise ist das Messinstrument als ein scannendes Messinstrument, z.B. als ein Scanner vorhanden. Beispielsweise erzeugt das Messinstrument während einer Messung punktweise, linienweise oder zeilenweise Messwerte. Denkbar ist auch, dass das Messinstrument ein interferometrisches und/oder ein holographisches Messverfahren verwendet.

Vorstellbar ist auch, dass das Messinstrument als ein berührender, insbesondere taktil arbeitender Messsensor ausgebildet ist. Beispielsweise ist das Messinstrument dazu ausgebildet, eine Auslenkgröße eines Tastelements des taktil arbeitenden Messsensors und/oder einer Kraft des Tastelements des taktil arbeitenden Messsensors zu ermitteln.

Weiter erweist es sich von Vorteil, dass ein Messelement als eine Kalibrierkugel oder als eine Lichtschranke vorhanden ist. Vorteilhafterweise sind die Messelemente an einem Kalibriernormal voneinander beabstandet vorhanden. Denkbar ist auch, dass ein Messelement als ein Schaltelement, z.B. als ein Schalter ausgebildet ist. Vorstellbar ist weiter, dass ein Messelement einen CCD-Sensor aufweist.

Denkbar ist, dass das Messelement als ein Messobjekt, z.B. als ein Referenzobjekt vorhanden ist. Das Messelement kann beispielsweise als eine Kalibrierkugel vorhanden sein. Vorstellbar ist auch, dass das Messelement kugelförmig, eckig, z.B. rechteckig, kegelförmig oder oval vorhanden ist. Insbesondere ist ein Messelement als ein Artefakt vorhanden. Das Artefakt ist beispielsweise speziell auf die Interaktion mit dem Messinstrument abgestimmt und ausgebildet, um eine Ermittlung eines Interaktionsdatums oder eines Erfassungsdatums zu ermöglichen.

Ebenfalls von Vorteil ist, dass die Vorrichtung dazu ausgebildet ist, ausgehend von der Interaktion mit der Kalibrierkugel einen Mittelpunkt der Kalibrierkugel zu ermitteln.

Beispielsweise erfasst das Messinstrument bei der Bewegung vom ersten Messelement zum zweiten Messelement die beiden Messelement. Z.B. vermisst das Messinstrument die beiden Messelemente. Beispielsweise detektiert das Messinstrument eine Oberfläche des Messelements, z.B. eine Oberfläche der Kalibrierkugel. Vorteilhafterweise ist der Vorrichtung eine geometrische Ausbildung der Oberfläche der Messelemente bekannt. Bevorzugterweise ist die Vorrichtung dazu ausgebildet, die Messwerte der Messungen eines Messelements an die bekannte Oberfläche des Messelements anzufitten. Hierdurch ist beispielsweise ein Referenzwert des Messelements ermittelbar. Der Referenzwert des Messelements ist beispielsweise ein Kugelmittelpunkt der Kalibrierkugel. Vorteilhafterweise bildet ein Referenzwert ein Interaktionsdatum oder ein Erfassungsdatum.

Auch ist es von Vorteil, dass das Messorgan dazu ausgebildet ist, an das Messinstrument angeordnet zu werden und, dass das Messinstrument dazu ausgebildet ist, das Messorgan anzuordnen. Beispielsweise ist das Messorgan integral mit dem Messinstrument vorhanden. Beispielsweise umfasst das Messorgan ein Montageorgan und das Messinstrument ein Montageelement zur Anordnung des Messorgans am Messinstrument. Beispielsweise ist das Messorgan an das Messinstrument anschraubbar vorhanden. Denkbar ist auch, dass das Messorgan an das Messinstrument geklemmt, geklebt oder magnetisch angeordnet werden kann. Ebenfalls vorstellbar ist, dass zur Ermittlung der Interaktionsdaten oder der Erfassungsdaten zunächst das Messorgan an die Werkzeugaufnahme der Maschine angeordnet wird und nach der Ermittlung das Messorgan von der Werkzeugaufnahme entfernt wird und das Messinstrument an die Werkzeugaufnahme angeordnet wird.

Außerdem ist es von Vorteil, dass die Vorrichtung eine Kontrolleinheit und eine Speichereinheit aufweist, wobei die Vorrichtung den ermittelten räumlichen Abstand zweier verschiedener Messungen des Messinstruments für die bekannte Sollgeschwindigkeit der Bewegungsachse der Maschine zusammen mit der bekannte Sollgeschwindigkeit der Bewegungsachse der Maschine in der Speichereinheit auslesbar abspeichert. Vorteilhafterweise speichert die Vorrichtung den ermittelten räumlichen Abstand zweier verschiedener Messungen des Messinstruments für die bekannte Sollgeschwindigkeit des Messinstruments zusammen mit der bekannte Sollgeschwindigkeit des Messinstruments in der Speichereinheit auslesbar ab. Beispielsweise ist die Vorrichtung auch dazu ausgebildet, zusätzlich zum ermittelten räumlichen Abstand auch die tatsächliche Istgeschwindigkeit des Messinstruments abzuspeichern.

In einer vorteilhaften Modifikation ist die Vorrichtung dazu ausgebildet, dass im angeordneten Zustand der Vorrichtung an der Maschine weitere Messungen des Messinstruments bei der bekannten Sollgeschwindigkeit der Bewegungsachse der Maschine erfolgen.

Aufgrund der oben genannten Kalibrierung oder Normierung der Geschwindigkeit der Bewegungsachse des Messinstruments, insbesondere der Kalibrierung oder Normierung des Messinstruments auf eine Sollgeschwindigkeit der Bewegungsachse der Maschine, insbesondere der Normierung der Messungen zueinander, auf eine Sollgeschwindigkeit der Maschine ist es möglich, mit der Vorrichtung bei weiteren Messungen bei der Sollgeschwindigkeit ein Messobjekt vergleichsweise genau zu vermessen.

In einer vorteilhaften Modifikation der Vorrichtung sind alle Messelemente der Vorrichtung gleich ausgebildet. Beispielsweise sind alle Messelement der Vorrichtung identisch. Zum Beispiel umfasst die Vorrichtung genau zwei Messelemente, genau drei Messelemente oder genau vier Messelemente. Vorteilhafterweise sind alle Messelemente in einem bekannten Abstand vorhanden.

Von Vorteil ist weiter, dass die Vorrichtung einen Zeitgeber aufweist, wobei die Vorrichtung dazu ausgebildet ist, den Zeitgeber der Vorrichtung mit einem Timer der Maschine zu synchronisieren. Beispielsweise umfasst die Vorrichtung eine Kontrolleinheit. Die Kontrolleinheit ist vorteilhafterweise als eine Recheneinheit vorhanden. Die Kontrolleinheit umfasst beispielsweise einen Mikrocontroller oder einen Mikroprozessor. Vorteilhafterweise ist die Kontrolleinheit mit einer Steuereinheit der Maschine verbindbar. Eine Steuereinheit der Maschine ist beispielsweise als eine numerische Steuerung, z.B. als eine CNC (computerized numerical control) ausgebildet. Vorteilhafterweise ist die Kontrolleinheit ausgebildet den Zeitgeber der Vorrichtung mit dem Timer der Maschine zu synchronisieren. Hierdurch ist eine vergleichsweise präzise Kalibrierung oder Normierung der Geschwindigkeit der Bewegungsachse der Maschine, insbesondere des Messinstruments bei einer Sollgeschwindigkeit realisierbar.

In einer vorteilhaften Ausführungsvariante ist im angeordneten Zustand der Vorrichtung an der Maschine die Vorrichtung dazu ausgebildet ist, ausgehend von einem Trigger, dem ermittelten räumlichen Abstand zweier verschiedener Messungen und einer bekannten Bewegungsrichtung der Bewegungsachsen der Maschine Messungen der Vorrichtung Maschinenpositionen des Messinstruments zuzuordnen, wobei der Vorrichtung die Maschinenposition des Messinstruments zum Triggerzeitpunkt bekannt ist.

Vorteilhafterweise ist die Vorrichtung, insbesondere die Kontrolleinheit derart mit der Maschine verbindbar, dass insbesondere aktuelle Maschinenpositionen des Messinstruments durch die Vorrichtung auslesbar sind. Zum Beispiel ist der Vorrichtung eine zeitliche Verzögerung, beispielsweise ein Delay, zwischen einem Abfragezeitpunkt einer Maschinenposition und einem Empfangszeitpunkt der Maschinenposition durch die Vorrichtung bekannt.

Bevorzugterweise ist jede Maschinenkoordinate, welche die Vorrichtung einer Messung zuweist, eine Maschinenkoordinate des an der Maschine angeordneten Messinstruments. Vorteilhafterweise ist die Maschinenkoordinate des an der Maschine angeordneten Messinstruments auf eine Ortskoordinate des Messobjekts transformierbar, z.B. durch Normierung. Vorteilhafterweise ist die Ortskoordinate des Messobjekts eine Messstelle, an welcher das Messinstrument das Messobjekt vermessen und dadurch die Messung erzeugt hat.

Auch wird vorgeschlagen, dass die Vorrichtung den Trigger bzw. das Triggersignal zusammen mit einer zum Zeitpunkt des Triggers erfassten ersten Messung in einer Speichereinheit der Vorrichtung ablegt, wobei der Vorrichtung ein zeitlicher Bezug von Trigger und der ersten Messung bekannt ist. Vorteilhafterweise ist der Vorrichtung ein Delay oder eine Verzögerungszeit zwischen Trigger und Erhalt der Messung vom Messinstrument bekannt. Insbesondere ist dieser Delay oder diese Verzögerung konstant. Hierdurch ist eine Zuordnung der Messung zu einer zugehörigen Messstelle, z.B. einer Maschinenkoordinate ermöglicht.

Beispielsweise beendet das Messinstrument nach Auslösen des Trigger eine Erfassung der Messungen. Zum Beispiel ist die erste Messung die zeitlich gesehen letzte erzeugte Messung der Messungserfassung. Beispielsweise ist die erste Messung die zeitlich gesehen letzte von der Kontrolleinheit verarbeitete Messung der Messungserfassung.

Weiter wird vorgeschlagen, dass die Kontrolleinheit dazu ausgebildet ist, das Triggersignal über eine Schnittstelle an die Steuereinheit der Maschine zu übermitteln. Hierdurch ist eine Achsbewegung der Maschine steuerbar, insbesondere ist aufgrund des Trigger eine Bewegung der Bewegungsachse der Maschine anhaltbar.

Von Vorteil ist auch, dass die Vorrichtung dazu ausgebildet ist, eine zum Zeitpunkt des Trigger erfasste erste Maschinenkoordinate, insbesondere eine Maschinenkoordinate des an der Maschine angeordneten Messinstruments, von der Maschine auszulesen, wobei der Vorrichtung ein zeitlicher Bezug von Trigger und der ersten Maschinenkoordinate bekannt ist, wobei die Kontrolleinheit dazu ausgebildet ist, einen zeitlichen Bezug zwischen der ersten Maschinenkoordinate und der ersten Messung herzustellen. Hierdurch ist die Erstellung eines Höhenprofils eine zu vermessenenden Messobjekts realisierbar.

Eine vorteilhafte Ausführungsvariante der Erfindung ist ein Messsystem umfassend ein Messinstrument und eine Vorrichtung nach einer der vorangegangen beschriebenen Varianten.

Eine weitere vorteilhafte Ausführungsform der Erfindung ist eine Maschine, insbesondere Werkzeugmaschine oder Messmaschine, mit einer Vorrichtung nach einer der vorangegangen beschriebenen Varianten oder einem Messsystem wie vorangegangen genannt.

Ebenfalls ist es von Vorteil, dass ausgehend von der Korrelation der ersten Messung mit der ersten Maschinenkoordinate, die Vorrichtung dazu ausgebildet ist, weiteren vom Messinstrument erfassten Messungen Maschinenkoordinaten, insbesondere Maschinenkoordinaten des Messinstruments, einzig dadurch zuzuweisen, dass eine insbesondere tatsächliche Bewegungsgeschwindigkeit und eine Bewegungsrichtung des Messinstruments während oder bei der Erfassung der Messungen bekannt ist. Hierdurch ist eine vergleichsweise präzise Vermessung des Messobjekts bei einer vergleichsweise kurzen Messzeit mit der Vorrichtung realisierbar.

### Figurenbeschreibung

Mehrere Ausführungsbeispiele werden anhand der nachstehenden schematischen Zeichnungen unter Angabe von weiteren Einzelheiten und Vorteilen näher erläutert:

Es zeigen:
- Figur 1: eine schematische Darstellung einer Maschine mit einem Messsystem mit einer Vorrichtung,
- Figur 2: zeigt eine zweite Variante der Vorrichtung und
- Figur 3: zeigt eine weitere Variante der Vorrichtung.

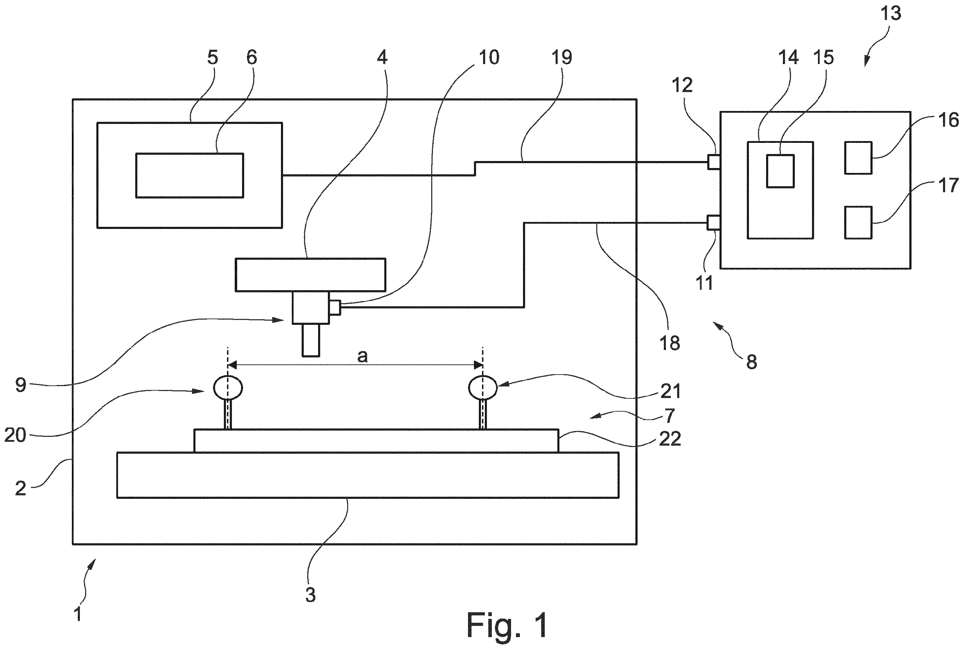

Figur 1 zeigt eine Maschine 1 mit einer schematisch dargestellten Umhausung 2, einem Maschinentisch 3, einer Bewegungsachse 4 und einer Steuereinheit 5. Die Maschine 1 umfasst beispielsweise ein Speichermodul 6, welches z.B. an der Steuereinheit 5 vorhanden ist. Auf dem Maschinentisch 3 ist beispielhaft eine Vorrichtung 7 angeordnet.

An der Maschine 1 ist vorteilhafterweise ein Messsystem 8 angeordnet. Das Messsystem 8 umfasst ein Messinstrument 9, eine erste Schnittstelle 10, eine zweite Schnittstelle 11 und beispielsweise eine dritte Schnittstelle 12. Weiter umfasst das Messsystem 8 beispielsweise eine Sende- und Empfangseinheit 13. Die Sende- und Empfangseinheit 13 weist beispielsweise eine Kontrolleinheit 14 mit einem Steuerungsmodul 15 auf. Das Messsystem 8 kann des Weiteren eine Speichereinheit 16 und einen Zeitgeber 17 umfassen.

In der Ausführungsvariante gemäß Figur 1 ist das Messinstrument 8 beispielhaft über die Schnittstellen 10, 11 mittels einer Signalleitung 18 mit der Sende- und Empfangseinheit 13 gekoppelt. Die Signalleitung 18 ist beispielsweise als ein kabelloser Übertragungskanal vorhanden. Die Signalleitung 18 ist beispielsweise als eine Funkverbindung oder ein Funkkanal ausgebildet. Denkbar ist auch, dass die Signalleitung 18 als eine optische Verbindung, z.B. als ein optischer Leitungskanal ausgebildet ist. Außerdem ist die Sende- und Empfangseinheit 13 mittels der Schnittstelle 12 mit der Maschine 1, insbesondere der Steuereinheit 5 der Maschine 1 über eine weitere Signalleitung 19 verbunden.

Denkbar ist weiter, dass die Schnittstelle 12 als eine Standardschnittstelle ausgebildet ist, z.B. als eine USB- oder Netzwerkschnittstelle. Beispielsweise ist diese Schnittstelle 12 dazu ausgebildet, Positionskoordinaten von der Maschine 1 durch die Kontrolleinheit 14 abzufragen.

Die Vorrichtung 7 umfasst ein erstes Messelement 20 und ein zweites Messelement 21. Die beiden Messelemente 20, 21 sind vorteilhafterweise als Kalibrierkugeln vorhanden. Die beiden Messelemente 20, 21 sind beispielsweise an einem Kalibriernormal 22 angeordnet. Das Kalibiernormal 22 ist vorteilhafterweise vergleichsweise längenunveränderlich vorhanden, insbesondere im Hinblick auf eine Temperaturveränderung der Umgebung.

Die beiden Messelemente 20, 21 sind in einem bekannten und konstanten Abstand a zueinander am Kalibriernormal 22 angeordnet. Der Abstand a der Messelemente 20, 21 zueinander erstreckt sich beispielsweise ausgehend von einer Senkrechten, welche durch einen Kugelmittelpunkt des ersten Messelements 20 verläuft, welches als Kalibrierkugel ausgebildet ist, bis zu einer Senkrechten, welche durch einen Kugelmittelpunkt des zweiten Messelements 21 verläuft, welches als Kalibrierkugel ausgebildet ist.

Vorteilhafterweise wird zur Normierung oder Kalibrierung der Geschwindigkeit der Bewegungsachse der Maschine, insbesondere des Messinstruments 9, das Messinstrument 9 mittels der Bewegungsachse 4 insbesondere entlang einer Erstreckung des Abstands a vom ersten Messelement 20 zum zweiten Messelement 21 bewegt.

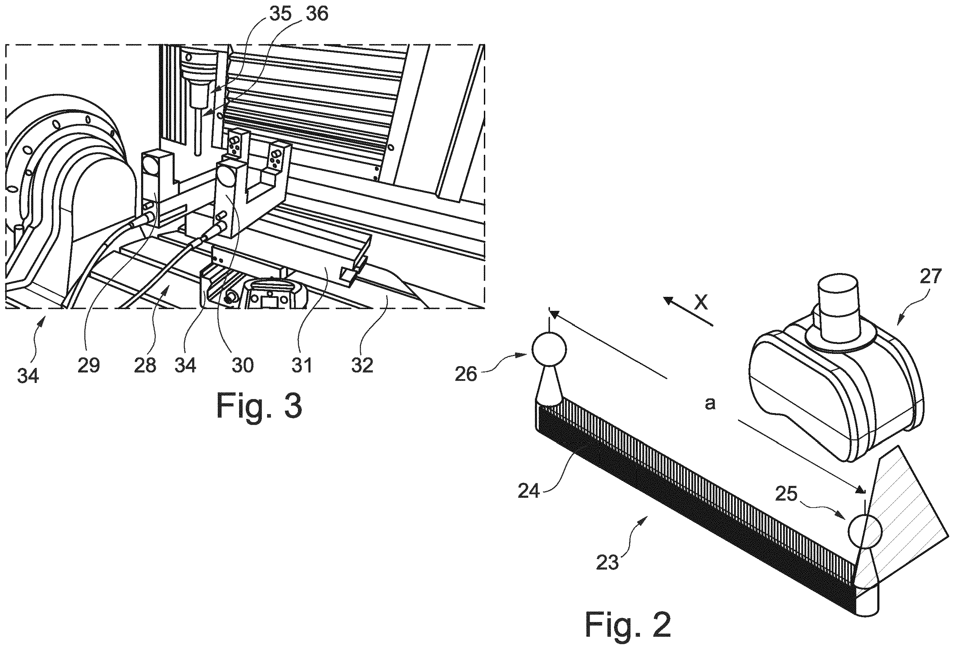

Figur 2 zeigt eine Variante einer Vorrichtung 23. Die Vorrichtung 23 umfasst ein Kalibriernormal 24 an welchem beabstandet zueinander Kalibrierkugeln 25, 26 angeordnet sind. Der Abstand er Kalibrierkugeln 25, 26 zueinander ist bekannt und vorteilhafterweise aufgrund des Kalibriernormals 24 vergleichsweise konstant. Die Vorrichtung 23 gemäß Figur 2 umfasst außerdem ein Messinstrument in Form eines Laser-Triangulationsscanners 27. Der Laser-Triangulationsscanner 27 erfasst bei einer Messung mehrere Messwerte, welche in einer Linie nebeneinander vorhanden sind, wobei die Linie sich vorteilhafterweise quer zu einer Bewegungsrichtung des Laser-Triangulationsscanner 27 erstreckt.

Zur Kalibrierung mit dem Laser-Triangulationsscanner 27 wird der Laser-Triangulationsscanner 27 in Richtung X mit einer bekannten und vorteilhafterweise konstanten Bewegungsgeschwindigkeit, insbesondere der bekannten Sollgeschwindigkeit bewegt. Hierbei erfasst der Laser-Triangulationsscanner 27 die Kalibrierkugeln 25, 26. Vorteilhafterweise erfasst der Laser-Triangulationsscanner 27 die Kalibrierkugeln 25, 26 mit einem, insbesondere mit mehreren Messungen. Aufgrund der bekannten Durchmesser der Kalibrierkugeln 25, 26 ist die Vorrichtung 23 dazu ausgebildet auf Basis der Messungen eine Oberfläche der Kalibrierkugeln 25, 26 an die Messungen zu fitten, wodurch jeweils ein Kugelmittelpunkt der Kalibrierkugeln 25, 26 bestimmbar ist. Vorteilhafterweise ist der Vorrichtung 23 ein Abstand der Kugelmittelpunkte der Kalibrierkugeln 25, 26 bekannt. Weiter ist die Vorrichtung 23 dazu ausgebildet eine Anzahl an Messungen zu bestimmen, welche erfolgt sind während der Laser-Triangulationsscanner 27 vom Mittelpunkt der ersten Kalibrierkugel 25 zum Mittelpunkt der zweiten Kalibrierkugel 26 bewegt wurde. Beispielsweise ist die Vorrichtung 23 außerdem dazu ausgebildet, auf Basis des bekannten Abstands der Kugelmittelpunkte der Kalibrierkugeln 25, 26 und der bestimmten Anzahl der Messungen zwischen den Kugelmittelpunkten der Kalibrierkugeln 25, 26 ein Abstand zwischen zweier Messungen zu bestimmen. Hierdurch ist der Laser-Triangulationsscanner 27 für die bekannte Sollgeschwindigkeit kalibrierbar.

Figur 3 zeigt eine weitere Variante einer Vorrichtung 28. Die Vorrichtung 28 umfasst ein erstes Messelement in Form einer ersten Lichtschranke 29 und ein zweites Messelement in Form einer zweiten Lichtschranke 30. Die erste und die zweite Lichtschranke 29, 30 sind auf einem Kalibriernormal 31 in einem definierten und bekannten Abstand zueinander befestigt. Das Kalibriernormal 31 ist wiederum an einem Maschinentisch 32 einer Maschine 33 mittels einer Werkstückaufnahme 34 befestigt.

An einer Werkzeugaufnahme 35 der Maschine 33 ist ein Messorgan in Form eines Messdorns 36 angeordnet. Interaktionsdaten werden bei dieser Variante der Vorrichtung 28 dadurch ermittelt, indem der Messdorn 36 durch die Lichtschranken 29, 30 bewegt wird und die Lichtschranken 29, 30 den Messdorn 36 dabei detektieren und jeweils ein Interaktionsdatum auslösen. Hierdurch ist eine tatsächliche durchschnittliche Bewegungsgeschwindigkeit des Messdorns 36 bzw. einer Maschinenachse der Maschine 33 ermittelbar.

**Bezugszeichenliste**

| | | | |
|---|---|---|---|
| 1 | Maschine | 19 | Signalleitung |
| 2 | Umhausung | 20 | Messelement |
| 3 | Maschinentisch | 21 | Messelement |
| 4 | Bewegungsachse | 22 | Kalibriernormal |
| 5 | Steuereinheit | 23 | Vorrichtung |
| 6 | Speichermodul | 24 | Kalibriernormal |
| 7 | Vorrichtung | 25 | Kalibrierkugel |
| 8 | Messsystem | 26 | Kalibrierkugel |
| 9 | Messinstrument | 27 | Laser-Triangulationsscanner |
| 10 | Schnittstelle | | |
| 11 | Schnittstelle | 28 | Vorrichtung |
| 12 | Schnittstelle | 29 | Lichtschranke |
| 13 | Sende- und Empfangseinheit | 30 | Lichtschranke |
| | | 31 | Kalibriernormal |
| 14 | Kontrolleinheit | 32 | Maschinentisch |
| 15 | Steuerungsmodul | 33 | Maschine |
| 16 | Speichereinheit | 34 | Werkstückaufnahme |
| 17 | Zeitgeber | 35 | Werkzeugaufnahme |
| 18 | Signalleitung | 36 | Messdorn |

## Patentansprüche

1. Vorrichtung (7, 23, 28) zur Kalibrierung oder zur Normierung einer Geschwindigkeit einer Bewegungsachse einer Maschine (1, 33), wobei die Maschine (1, 33) als eine Werkzeugmaschine oder als eine Messmaschine ausgebildet ist, wobei die Vorrichtung (7, 23, 28) ein Messinstruments (9) und einen Messaufbau aufweist, wobei der Messaufbau ein erstes und ein zweites Messelement (20, 21) aufweist, wobei das erste und das zweite Messelement (20, 21) in einem definierten und bekannten Abstand zueinander am Messaufbau vorhanden sind, wobei der Messaufbau dazu ausgebildet ist, an einer Werkstückaufnahme (34) der Maschine (1, 33) angeordnet zu werden, wobei das Messinstrument (9) dazu ausgebildet ist, an einer Werkzeugaufnahme der Maschine (1, 33) angeordnet zu werden, wobei das Messinstrument (9) dazu ausgebildet ist, mit einer bekannten Sollfrequenz Messungen auszuführen, wobei die Vorrichtung (7, 23, 28) dazu ausgebildet ist, dass wenn im angeordneten Zustand der Vorrichtung (7, 23, 28) an der Maschine (1, 33) das Messinstrument (9) bei einer bekannten Sollgeschwindigkeit einer Bewegungsachse der Maschine (1, 33), vom ersten Messelement (20) zum zweiten Messelement (21) bewegt wird, die Vorrichtung (7, 23, 28), insbesondere das Messinstrument (9), mit dem jeweiligen Messelement (20, 21) interagiert oder die Vorrichtung (7, 23, 28), insbesondere das Messinstrument (9), das jeweilige Messelement (20, 21) erfasst, und die Vorrichtung (7, 23, 28) dabei jeweils ein Interaktionsdatum oder ein Erfassungsdatum ermittelt, **dadurch gekennzeichnet, dass** die Vorrichtung (7, 23, 28) dazu ausgebildet ist, ausgehend vom ersten Interaktionsdatum oder Erfassungsdatum bis zum zweiten Interaktionsdatum oder bis zum zweiten Erfassungsdatum eine Anzahl an Messungen des Messinstruments (9) zu erfassen, wobei die Vorrichtung (7, 23, 28) weiter dazu ausgebildet ist, durch die Erfassung der Anzahl der Messungen einen räumlichen Abstand zweier verschiedener Messungen des Messinstruments (9) für die bekannte Sollgeschwindigkeit der Bewegungsachse der Maschine (1, 33) zu ermitteln.

2. Vorrichtung (7, 23, 28) nach dem vorangegangenen Anspruch 1, **dadurch gekennzeichnet, dass** die Vorrichtung (7, 23, 28) dazu ausgebildet ist, einen zeitlichen Abstand zwischen den beiden Interaktionsdaten oder zwischen den beiden Erfassungsdaten zu bestimmen, wobei die Vorrichtung (7, 23, 28) weiter dazu ausgebildet ist, durch die Bestimmung des zeitlichen Abstands einen räumlichen Abstand zweier verschiedener Messungen des Messinstruments (9) für die bekannte Sollgeschwindigkeit der Bewegungsachse der Maschine (1, 33) zu ermitteln.

3. Vorrichtung (7, 23, 28) nach einem der vorangegangen genannten Ansprüchen, **dadurch gekennzeichnet, dass** zur Bestimmung der Interaktionsdaten oder der Erfassungsdaten ein zum Messinstrument (9) verschiedenes Messorgan (36) vorgesehen ist.

4. Vorrichtung (7, 23, 28) nach einem der vorangegangen genannten Ansprüchen, **dadurch gekennzeichnet, dass** das Messorgan (36) dazu ausgebildet ist, an das Messinstrument (9) angeordnet zu werden und, dass das Messinstrument (9) dazu ausgebildet ist, das Messorgan (36) anzuordnen.

5. Vorrichtung (7, 23, 28) nach einem der vorangegangen genannten Ansprüchen, **dadurch gekennzeichnet, dass** im angeordneten Zustand der Vorrichtung (7, 23, 28) an der Maschine (1, 33) weitere Messungen des Messinstruments (9) bei der bekannten Sollgeschwindigkeit der Bewegungsachse der Maschine (1, 33) erfolgen.

6. Vorrichtung (7, 23, 28) nach einem der vorangegangen genannten Ansprüchen, **dadurch gekennzeichnet, dass** die Vorrichtung (7, 23, 28) eine Kontrolleinheit (14) und eine Speichereinheit (16) aufweist, wobei die Vorrichtung (7, 23, 28) den ermittelten räumlichen Abstand zweier verschiedener Messungen des Messinstruments (9) für die bekannte Sollgeschwindigkeit der Bewegungsachse der Maschine (1, 33) zusammen mit der bekannte Sollgeschwindigkeit der Bewegungsachse der Maschine (1, 33) in der Speichereinheit (16) auslesbar abspeichert.

7. Vorrichtung (7, 23, 28) nach einem der vorangegangen genannten Ansprüchen, **dadurch gekennzeichnet, dass** ein Messelement als eine Kalibrierkugel (25, 26) oder als eine Lichtschranke (29, 30) vorhanden ist.

8. Vorrichtung (7, 23, 28) nach einem der vorangegangen genannten Ansprüchen, **dadurch gekennzeichnet, dass** alle Messelemente (20, 21) der Vorrichtung (7, 23, 28) gleich ausgebildet sind.

9. Vorrichtung (7, 23, 28) nach dem vorangegangen genannten Anspruch 7, **dadurch gekennzeichnet, dass** die Vorrichtung (7, 23, 28) dazu ausgebildet ist, ausgehend von der Interaktion mit der Kalibrierkugel (25, 26) einen Mittelpunkt der Kalibrierkugel (25, 26) zu ermitteln.

10. Vorrichtung (7, 23, 28) nach einem der vorangegangen genannten Ansprüchen, **dadurch gekennzeichnet, dass** die Vorrichtung (7, 23, 28) einen Zeitgeber (17) aufweist, wobei die Vorrichtung (7, 23, 28) dazu ausgebildet ist, den Zeitgeber (17) der Vorrichtung (7, 23, 28) mit einem Timer der Maschine (1, 33) zu synchronisieren.

11. Vorrichtung (7, 23, 28) nach einem der vorangegangen genannten Ansprüchen, **dadurch gekennzeichnet, dass** im angeordneten Zustand der Vorrichtung (7, 23, 28) an der Maschine (1, 33) die Vorrichtung (7, 23, 28) dazu ausgebildet ist, ausgehend von einem Trigger, dem ermittelten räumlichen Abstand zweier verschiedener Messungen und einer bekannten Bewegungsrichtung der Bewegungsachsen der Maschine (1, 33) Messungen der Vorrichtung (7, 23, 28) Maschinenpositionen des Messinstruments (9) zuzuordnen, wobei der Vorrichtung (7, 23, 28) die Maschinenposition des Messinstruments (9) am Trigger bekannt ist.

12. Messsystem (8) umfassend eine Vorrichtung (7, 23, 28) nach einem der vorangegangenen Ansprüche.

13. Maschine (1, 33), insbesondere Werkzeugmaschine oder Messmaschine, mit einer Vorrichtung (7, 23, 28) nach einem der vorangegangenen Ansprüche oder einem Messsystem (8) nach dem vorangegangenen Anspruch 12.

## Claims

1. Device (7, 23, 28) for calibrating or for normalizing a speed of an axis of motion of a machine (1, 33), the machine (1, 33) taking the form of a machine tool or a measuring machine, the device (7, 23, 28) exhibiting a measuring instrument (9) and a measuring set-up, the measuring set-up exhibiting a first and a second measuring element (20, 21), the first and the second measuring element (20, 21) being present at a defined and known separation from one another on the measuring set-up,
the measuring set-up being designed to be arranged on a workpiece receptacle (34) of the machine (1, 33), the measuring instrument (9) being designed to be arranged on a tool receptacle of the machine (1, 33), the measuring instrument (9) being designed to carry out measurements at a known set frequency, the device (7, 23, 28) being so designed that when, in the state where the device (7, 23, 28) is arranged on the machine (1, 33), the measuring instrument (9) is moved from the first measuring element (20) to the second measuring element (21) at a known set speed of an axis of motion of the machine (1, 33) the device (7, 23, 28), in particular the measuring instrument (9), interacts with the respective measuring element (20, 21)
or
the device (7, 23, 28), in particular the measuring instrument (9), detecting the respective measuring element (20, 21), and the device (7, 23, 28) ascertaining, in each instance, an interaction date or an acquisition date,
**characterized in that** the device (7, 23, 28) is designed to acquire a number of measurements by the measuring instrument (9) starting from the first interaction date or acquisition date up until the second interaction date or up until the second acquisition date,
the device (7, 23, 28) being further designed to ascertain a spatial separation of two different measurements by the measuring instrument (9) for the known set speed of the axis of motion of the machine (1, 33) by the acquisition of the number of measurements.

2. Device (7, 23, 28) according to the preceding Claim 1, **characterized in that** the device (7, 23, 28) is designed to determine a temporal separation between the two interaction dates or between the two acquisition dates, the device (7, 23, 28) being further designed to ascertain a spatial separation of two different measurements by the measuring instrument (9) for the known set speed of the axis of motion of the machine (1, 33) by the determination of the temporal separation.

3. Device (7, 23, 28) according to one of the preceding claims, **characterized in that** a measuring member (36), different from the measuring instrument (9), is provided for the purpose of determining the interaction dates or the acquisition dates.

4. Device (7, 23, 28) according to one of the preceding claims, **characterized in that** the measuring member (36) is designed to be arranged on the measuring instrument (9), and **in that** the measuring instrument (9) is designed to arrange the measuring member (36) .

5. Device (7, 23, 28) according to one of the preceding claims, **characterized in that** in the state where the device (7, 23, 28) is arranged on the machine (1, 33) further measurements by the measuring instrument (9) are undertaken at the known set speed of the axis of motion of the machine (1, 33).

6. Device (7, 23, 28) according to one of the preceding claims, **characterized in that** the device (7, 23, 28) exhibits a monitoring unit (14) and a storage unit (16), the device (7, 23, 28) storing the ascertained spatial separation of two different measurements by the measuring instrument (9) for the known set speed of the axis of motion of the machine (1, 33) together with the known set speed of the axis of motion of the machine (1, 33) in the storage unit (16) in a form capable of being read out.

7. Device (7, 23, 28) according to one of the preceding claims, **characterized in that** a measuring element is present in the form of a calibration ball (25, 26) or in the form of a photoelectric barrier (29, 30) .

8. Device (7, 23, 28) according to one of the preceding claims, **characterized in that** all the measuring elements (20, 21) of the device (7, 23, 28) are of like design.

9. Device (7, 23, 28) according to the preceding Claim 7, **characterized in that** the device (7, 23, 28) is designed to ascertain a center of the calibration ball (25, 26) from the interaction with the calibration ball (25, 26).

10. Device (7, 23, 28) according to one of the preceding claims, **characterized in that** the device (7, 23, 28) exhibits a timing unit (17), the device (7, 23, 28) being designed to synchronize the timing unit (17) of the device (7, 23, 28) with a timer of the machine (1, 33).

11. Device (7, 23, 28) according to one of the preceding claims, **characterized in that** in the state where the device (7, 23, 28) is arranged on the machine (1, 33) the device (7, 23, 28) is designed to assign measurements by the device (7, 23, 28), starting from a trigger, the ascertained spatial separation of two different measurements and a known direction of motion of the axes of motion of the machine (1, 33), to machine positions of the measuring instrument (9), the machine position of the measuring instrument (9) at the trigger being known to the device (7, 23, 28).

12. Measuring system (8) including a device (7, 23, 28) according to one of the preceding claims.

13. Machine (1, 33), in particular a machine tool or measuring machine, with a device (7, 23, 28) according to one of the preceding claims or with a measuring system (8) according to the preceding Claim 12.

## Revendications

1. Dispositif (7, 23, 28) d'étalonnage ou de standardisation d'une vitesse d'un axe de déplacement d'une machine (1, 33), la machine (1, 33) étant réalisée sous la forme d'une machine-outil ou sous la forme d'une machine de mesure, le dispositif (7, 23, 28) présentant un instrument de mesure (9) et un ensemble de mesure, l'ensemble de mesure présentant un premier et un deuxième élément de mesure (20, 21), le premier et le deuxième élément de mesure (20, 21) étant présents à une distance définie et connue l'un de l'autre sur l'ensemble de mesure, l'ensemble de mesure étant réalisé pour être disposé sur un logement de pièce (34) de la machine (1, 33), l'instrument de mesure (9) étant réalisé pour être disposé sur un logement d'outil de la machine (1, 33), l'instrument de mesure (9) étant réalisé pour effectuer des mesures à une fréquence de consigne connue, le dispositif (7, 23, 28) étant réalisé de telle sorte que, lorsque, dans l'état du dispositif (7, 23, 28) disposé sur la machine (1, 33), l'instrument de mesure (9) est déplacé du premier élément de mesure (20) au deuxième élément de mesure (21) à une vitesse de consigne connue d'un axe de déplacement de la machine (1, 33), le dispositif (7, 23, 28), en particulier l'instrument de mesure (9), interagit avec l'élément de mesure (20, 21) respectif ou le dispositif (7, 23, 28), en particulier l'instrument de mesure (9), détecte l'élément de mesure (20, 21) respectif, et le dispositif (7, 23, 28) détermine ainsi respectivement une date d'interaction ou une date de détection,
**caractérisé en ce que**
le dispositif (7, 23, 28) est réalisé pour détecter un certain nombre de mesures de l'instrument de mesure (9) à partir de la première date d'interaction ou date de détection jusqu'à la deuxième date d'interaction ou jusqu'à la deuxième date de détection,
le dispositif (7, 23, 28) étant en outre réalisé pour déterminer un écart spatial entre deux mesures différentes de l'instrument de mesure (9) pour la vitesse de consigne connue de l'axe de déplacement de la machine (1, 33) par la détection du nombre de mesures.

2. Dispositif (7, 23, 28) selon la revendication 1 précédente, **caractérisé en ce que** le dispositif (7, 23, 28) est réalisé pour déterminer un écart temporel entre les deux dates d'interaction ou entre les deux dates de détection, le dispositif (7, 23, 28) étant en outre réalisé pour déterminer un écart spatial entre deux mesures différentes de l'instrument de mesure (9) pour la vitesse de consigne connue de l'axe de déplacement de la machine (1, 33) par la détermination de l'écart temporel.

3. Dispositif (7, 23, 28) selon l'une des revendications précédentes, **caractérisé en ce qu'**un organe de mesure (36) différent de l'instrument de mesure (9) est prévu pour la détermination des dates d'interaction ou des dates de détection.

4. Dispositif (7, 23, 28) selon l'une des revendications précédentes, **caractérisé en ce que** l'organe de mesure (36) est réalisé pour être disposé sur l'instrument de mesure (9), et **en ce que** l'instrument de mesure (9) est réalisé pour disposer l'organe de mesure (36) .

5. Dispositif (7, 23, 28) selon l'une des revendications précédentes, **caractérisé en ce que**, dans l'état du dispositif (7, 23, 28) disposé sur la machine (1, 33), d'autres mesures de l'instrument de mesure (9) sont effectuées à la vitesse de consigne connue de l'axe de déplacement de la machine (1, 33).

6. Dispositif (7, 23, 28) selon l'une des revendications précédentes, **caractérisé en ce que** le dispositif (7, 23, 28) présente une unité de contrôle (14) et une unité d'enregistrement (16), le dispositif (7, 23, 28) enregistrant de manière lisible dans l'unité d'enregistrement (16) l'écart spatial déterminé entre deux mesures différentes de l'instrument de mesure (9) pour la vitesse de consigne connue de l'axe de déplacement de la machine (1, 33) conjointement avec la vitesse de consigne connue de l'axe de déplacement de la machine (1, 33).

7. Dispositif (7, 23, 28) selon l'une des revendications précédentes, **caractérisé en ce qu'**un élément de mesure est présent sous la forme d'une bille d'étalonnage (25, 26) ou sous la forme d'une barrière photoélectrique (29, 30).

8. Dispositif (7, 23, 28) selon l'une des revendications précédentes, **caractérisé en ce que** tous les éléments de mesure (20, 21) du dispositif (7, 23, 28) sont réalisés de manière identique.

9. Dispositif (7, 23, 28) selon la revendication 7 précédente, **caractérisé en ce que** le dispositif (7, 23, 28) est réalisé pour déterminer un centre de la bille d'étalonnage (25, 26) à partir de l'interaction avec la bille d'étalonnage (25, 26).

10. Dispositif (7, 23, 28) selon l'une des revendications précédentes, **caractérisé en ce que** le dispositif (7, 23, 28) présente une horloge (17), le dispositif (7, 23, 28) étant réalisé pour synchroniser l'horloge (17) du dispositif (7, 23, 28) avec une minuterie de la machine (1, 33).

11. Dispositif (7, 23, 28) selon l'une des revendications précédentes, **caractérisé en ce que**, dans l'état du dispositif (7, 23, 28) disposé sur la machine (1, 33), le dispositif (7, 23, 28) est réalisé pour associer des mesures du dispositif (7, 23, 28) à des positions de machine de l'instrument de mesure (9) à partir d'une minuterie, de l'écart spatial déterminé entre deux mesures différentes et d'une direction de déplacement connue des axes de déplacement de la machine (1, 33), la position de machine de l'instrument de mesure (9) au niveau de la minuterie étant connue du dispositif (7, 23, 28).

12. Système de mesure (8) comprenant un dispositif (7, 23, 28) selon l'une des revendications précédentes.

13. Machine (1, 33), en particulier machine-outil ou machine de mesure, comportant un dispositif (7, 23, 28) selon l'une des revendications précédentes ou un système de mesure (8) selon la revendication 12 précédente.
